(19) Europäisches Patentamt
European Patent Office
Office européen des brevets

(11) Veröffentlichungsnummer: **0 147 369**
**B1**

(12) **EUROPÄISCHE PATENTSCHRIFT**

(45) Veröffentlichungstag der Patentschrift: **02.01.91**

(51) Int. Cl.$^5$: **C 08 B 11/15**, B 01 J 20/22, B 01 D 15/08

(21) Anmeldenummer: **84810629.0**

(22) Anmeldetag: **17.12.84**

# (54) Ionisch modifiziertes Cellulosematerial, dessen Herstellung und Verwendung.

(30) Priorität: **22.12.83 CH 6856/83**

(43) Veröffentlichungstag der Anmeldung:
**03.07.85 Patentblatt 85/27**

(45) Bekanntmachung des Hinweises auf die Patenterteilung:
**02.01.91 Patentblatt 91/01**

(84) Benannte Vertragsstaaten:
**BE CH DE FR GB IT LI NL SE**

(56) Entgegenhaltungen:
**GB-A- 733 100**
**CHEMICAL ABSTRACTS, Band 75, Nr. 4, 26. Juli 1971, Seite 119, Zusammenfassung Nr. 22753y, Columbus, Ohio, US; J. PASTYR et al.: "Preparation and properties of the sulfoethyl cellulose ion-exchanger based on crosslinked microcrystalline cellulose", & CELLUL. CHEM. TECHNOL. 1971, 5(1), 17-22**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Merz, Jürg, Dr.**
**Langgartenstrasse 51**
**CH-4105 Biel-Benken (CH)**
Erfinder: **Voser, Walter, Dr.**
**Alemannenweg 2**
**CH-4123 Allschwil (CH)**

(56) References cited:
**CHEMICAL ABSTRACTS, Band 94, Nr. 10, 9. März 1981, Seite 101, Zusammenfassung Nr. 67479x, Columbus, Ohio, US; N.E. KOTEL'NIKOVA et al.: "Study of the structure and chromatographic properties of microcrystalline cellulose produced from birchwood", & KHIM. DREV. 1980, (6), 3-12**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 147 369 B1

**Beschreibung**

Aus den deutschen Offenlegungsschriften 2 650 988, 2 727 755 und 2 925 689 sind auf chemischem Wege ionisch modifizierte, z.B. kationische, amphotere oder anionische Cellulosematerialien bekannt, die in der Abwasserreinigung, insbesondere zum Entfernen von Farbstoffen Verwendung finden. Die bekannten ionisch modifizierten Cellulosematerialien werden aus Cellulose in beliebiger Ausführungsform, wie z.B. aus Papierbrei, als Ausgangsmaterial hergestellt und in der britischen Patentschrift 733 100 sind ionisch modifizierte Cellulosematerialien offenbart, die in der Herstellung permselektiver Membranen für die Elektrodialyse eingesetzt werden. Als Ausgangsstoffe werden z.B. regenerierte Cellulose, Polyvinylalkohol oder Amylose verwendet.

Es wurde nun gefunden, dass ionisch modifizierte Cellulosematerialien mit vorteilhaften, unerwarteten Eigenschaften erhältlich sind, die ihre Anwendung als stationäre Phase in der chromatographischen Trennung von ionisch geladenen Substanzgemischen ermöglichen, sofern bei der Herstellung solcher Cellulosematerialien Cellulose in Pulverform der nachstehend angegebenen Art eingesetzt werden.

Gegenstand der vorliegenden Erfindung ist daher ein ionisch modifiziertes Cellulosematerial aus pulverförmiger mikrokristalliner Cellulose, dessen ionischer Bestandteil über die Gruppierung der Formel

(1) $$-O-CH_2-NH-CO-$$

an den Celluloseteil gebunden ist, wobei die Carbonylgruppe mit dem ionischen Bestandteil des Materials und das Sauerstoffatom mit dem Celluloseanteil des Materials verbunden sind, das dadurch gekennzeichnet ist, dass man als Ausgangsstoff mikrokristalline Holz-Cellulose (d.h. Holzzellstoff) in Pulverform einsetzt, wobei die Cellulose einen Polymerisationsgrad von 490 bis 550 besitzt und das Cellulosepulver aus Teilchen besteht, die eine spezifische BET-Oberfläche von 0,8 bis 1,1 $m^2/g$ und einen Quellungsgrad in Wasser bei 20°C von 4 bis 6 ml/g aufweisen.

Das Herstellungsverfahren für das ionisch modifizierte Cellulosematerial, dessen Verwendung zum Trennen von Substanzgemischen und chromatographische Trennverfahren, bei welchen dieses Material eingesetzt wird, bilden weitere Gegenstände der vorliegenden Erfindung.

Das wesentlichen Kennzeichen der Cellulose in Pulverform, aus welcher das erfindungsgemässe Material erhältlich ist, ist der Polymerisationsgrad. Ionisch modifizierte Celllulosematerialien, die aus einer Cellulose mit einem Polymerisationsgrad von z.B. 470 erhältlich sind, genügen den Anforderungen nicht, die an stationäre Phasen in chromatographischen Trennverfahren gestellt werden, da sie ein ungenügendes Fliessverhalten in chromatographischen Trennsäulen aufweisen. Der Polymerisationsgrad wird aufgrund der Viskosität der Cellulose in Kupferäthylendiamin-Lösung gemäss Methode der Scandinavian Pulp, Paper and Board Testing Committee SCAN—C 15:62 vom October 1962 bestimmt.

Die spezifische BET-Oberfläche der Pulverteilchen als weiteres Kennzeichen der Cellulose, aus welcher das erfindungsgemässe Material erhältlich ist, wird mit Hilfe der Stickstoffadsorption nach Brunauer, Emmett und Teller bestimmt (vgl. J. Am. Chem. Soc. Band 60, Seiten 309 bis 319 (1938), ferner auch Chemie-Ing. Techn. Band 32, Seiten 349 bis 354 (1960) und Band 35, Seiten 586 bis 589 (1963)). Cellulosepulver, deren Teilchen eine BET-Oberfläche von weniger als 0,75 oder mehr als 1,15 $m^2/g$ aufweisen, führen zu ionisch modifizierten Cellulosematerialien, die als stationäre Phase im chromatographischen Verfahren nur zu ungenügenden Trennungen von Substanzgemischen führen.

Der angegebene Quellungsgrad ist ein weiteres Kennzeichen der Cellulose, aus welcher das erfindungsgemässe Material erhältlich ist. Cellulosematerial aus Baumwoll-Linters in Pulverform, die in Wasser sogar nach 70 Stunden nur eine geringfügige Quellung aufweisen, eignen sich nicht als stationäre Phasen für Chromatographiezwecke.

Das Cellulosepulver als Ausgangsmaterial der angegebenen Morphologie, das zum erfindungsgemässen Cellulosematerial auf bekannte Weise chemisch modifiziert wird, ist an sich bekannt und im Handel unter Markennamen, wie z.B. Cellulose S & S 123® und SERVA HBS® erhältlich.

Die vorstehend angegebenen Unterscheidungsmerkmale des als Ausgangsmaterial eingesetzten Cellulosepulvers, insbesondere das Polymerisationsgrad, bewirken ein gutes Fliessverhalten des erfindungsgemässen, ionisch modifizierten Cellulosematerials als stationäre Phase in chromatographischen Trennverfahren, sofern Festbettverfahren zur Anwendung kommen. Dieses Fliessverfahren wird als Durchflussgeschwindigkeit quantitativ erfasst, deren bevorzugter Bereich 600 bis 800 $ml \cdot h^{-1} \cdot cm^{-2}$ beträgt. Die Durchflussgeschwindigkeit stellt somit eine technisch wichtige Eigenschaft des ionisch modifizierten Cellulosematerials, die z.B. von der Trennsäulegeometrie weitgehend unabhängig ist, weil die Durchflussgeschwindigkeit in ml/h auf die Fläche in $cm^2$ der stationären Phase in der Trennsäule bezogen ist. Sofern für das chromatographische Trennverfahren Säulen eingesetzt werden, beträgt der Gegendruck etwa 0,01 bis etwa 10 bar für eine Durchflussgeschwindigkeit von etwa 20 bis etwa 5500 $ml \cdot h^{-1}\ cm^{-2}$, insbesondere 0,1 bis 5 bar für eine Durchflussgeschwindigkeit von 500 bis 800 $ml \cdot h^{-1} \cdot cm^{-2}$.

Das erfindungsgemässe, ionische modifizierte Cellulosematerial weist in der Regel einen Substitutionsgrad von etwa 0,1 bis etwa 0,4, vorzugsweise 0,15 bis 0,30, insbesondere 0,19 bis 0,23 auf, wie dies für das in den eingangs genannten Offenlegungsschriften beschriebene, ionisch modifizierte Cellulosematerial im allgemeinen auch der Fall ist. Der Substitutionsgrad kann z.B. aufgrund des Stickstoffgehaltes des modifizierten Cellulosematerials bestimmt werden.

Die Gruppierung der Formel (1) des erfindungsgemässen Materials, welches den Celluloseanteil über den Sauerstoff mit dem ionischen Bestandteil über die Carbonylgruppe verbindet, ist in den eingangs erwähnten deutschen Offenlegungsschriften beschrieben, wobei die ionischen Bestandteile (Substituenten) anionisch, vorzugsweise amphoter und insbesondere kationisch sind.

Solche Bestandteile, sofern sie kationisch sind, enthalten basische Substituenten, wie z.B. quaternäre Guanidinium-, Immonium- oder vor allem Ammoniumgruppen. Von besonderem Interesse sind kationische Bestandteile, die vorzugsweise substituierte Ammoniumgruppen enthalten, wobei in der Regel zwei solche Ammoniumgruppen vorhanden sind oder vor allem eine solche Ammoniumgruppe vorhanden ist.

Als N-Substituenten kommen aliphatische, cycloaliphatische, aromatische und araliphatische Gruppen in Frage, die gegebenenfalls zusammen mit den Stickstoff- und gegebenenfalls weiteren Heteroatomen, vorzugsweise 5-gliedrige, vor allem 6-gliedrige Ringe bilden können. Vor allem geradkettige oder verzweigte Niederalkylreste kommen als N-Substituenten in Betracht, wobei solche Niederalkylreste gegebenenfalls durch Hydroxyl, Nitril, Halogen oder Niederalkoxy substituiert sind.

Die basischen Reste bevorzugter, kationischer Bestandteile des erfindungsgemässen, modifizierten Cellulosematerials entsprechen somit z.B. der Formel.

(2) 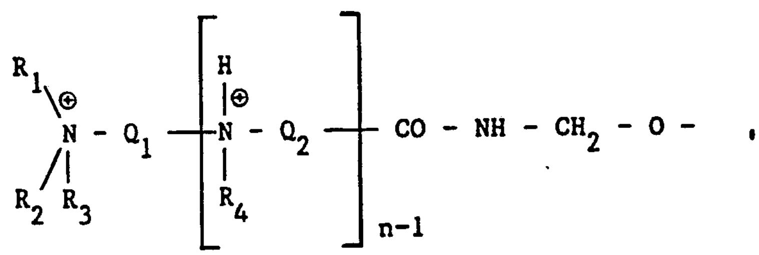

worin n 1 oder 2, $R_1$, $R_2$, $R_3$ und $R_4$ unabhängig voneinander je Wasserstoff, unsubstituiertes oder durch Hydroxyl, Nitril, Halogen oder $C_1$—$C_4$-Alkoxy substituiertes, geradkettiges oder verzweigtes $C_1$—$C_4$-Alkyl, unsubstituiertes oder durch $C_1$—$C_4$-Alkyl substituiertes Cycloalkyl, unsubstituiertes oder durch Nitro oder Halogen substituiertes Benzyl oder Phenyl, oder $R_1$ und $R_2$ zusammen mit dem sie verbindenden Stickstoffatom und gegebenenfalls weiteren Heteroatomen einen 5- oder 6-gliedrigen, heterocyclischen Ring oder $R_3$ und $R_4$ zusammen mit der sie verbindenden Gruppierung

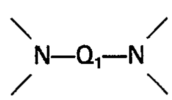

und gegebenenfalls weiteren Heteroatomen auch einen 5- oder 6-gliedrigen heterocyclischen Ring und $Q_1$ und $Q_2$ unabhängig voneinander je Alkylen mit 1 bis 8 Kohlenstoffatomen bedeuten.

In einer bevorzugten Ausführungsart der kationischen Bestandteile gemäss Formel (2) bedeutet $R_3$ Wasserstoff, wobei die übrigen N-Substituenten, falls sie aromatisch oder cycloaliphatisch sind, bevorzugt für unsubstituiertes Benzyl oder Cycloalkyl stehen oder $R_1$ oder $R_2$ zusammen mit dem sie verbindenden Stickstoffatom bevorzugt einen Pyrrolidinium-, Piperidinium-, Morpholinium- oder Piperaziniumring oder $R_2$ oder $R_3$ zusammen mit der sie verbindenden Gruppierung

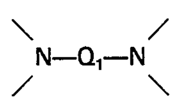

bevorzugt einen Imidazolidinium- oder Piperaziniumring bilden.

Demgemäss entsprechen bevorzugte, kationische Bestandteile, z.B. der Formel

(3) 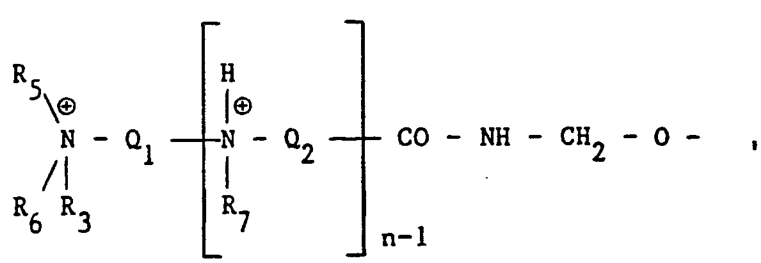

worin n 1 oder 2, $R_5$, $R_6$ und $R_7$ unabhängig voneinander je Wasserstoff, unsubstituiertes oder durch Hydroxyl, Nitril, Halogen oder $C_1$—$C_4$-Alkoxy substituiertes $C_1$—$C_4$-Alkyl, Cycloalkyl, Benzyl, oder $R_5$ und $R_6$ zusammen mit dem sie verbindenden Stickstoffatom einen Pyrrolidinium-, Piperidinium-, Morpholinium- oder Piperaziniumring oder $R_6$ und $R_7$ zusammen mit der sie verbindenden Gruppierung

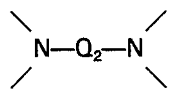

auch einen Imidazolidinium- oder Piperaziniumring und $Q_1$ und $Q_2$ unabhängig voneinander je Alkylen mit 1 bis 8, insbesondere 2 oder 3 Kohlenstoffatomen bedeuten.

In einer weiteren, ebenfalls bevorzugten Ausführungsart der kationischen Bestandteile gemäss Formel (4) werden als aliphatische N-Substituenten gegebenenfalls verzweigte Niederalkylreste eingesetzt, die gegebenenfalls durch Nitril, vor allem Hydroxy oder Chlor als Halogen substituiert sind. Als cycloaliphatische N-Substituenten kommen z.B. Cyclopentyl und vor allem Cyclohexyl in Betracht, die gegebenenfalls mit Niederalkyl substituiert sind. Durch Halogen, z.B. durch Chlor substituiertes oder vor allem unsubstituiertes Benzyl oder Phenyl sind als araliphatische und aromatische N-Substituenten bevorzugt. Bei den heterocyclischen Ringen, die zusammen mit dem Stickstoffatom einer Ammoniumgruppe oder den zwei Stickstoffatomen von zwei Ammoniumgruppen und gegebenenfalls weiteren Heteroatomen, insbesondere weiteren Stickstoff- und/oder Sauerstoffatomen gebildet werden können, handelt es sich vorzugsweise um z.B. Pyrrolidinium-, Piperidinium-, Morpholinium-, Imidazolinium-, Benzimidazolinium-, vor allem Piperazinium- und insbesondere Triaziniumringe, welche gegebenenfalls durch Halogen, z.B. Chlor, substituiert sind. Die Ammoniumgruppe ist mit der Carbonylgruppe der Gruppierung der Formel (1) vorzugsweise über eine Isopropylen-, vor allem n-Propylen-, vorzugsweise Aethylengruppe verbunden. Dies gilt auch, falls zwei Ammoniumgruppen vorhanden sind, für das Verbindungsglied zwischen diesen zwei Ammoniumgruppen.

Demgemäss weisen weitere, bevorzugte, kationisch modifizierte, erfindungsgemässe Cellulosematerialien basische Reste der Formel

(4) 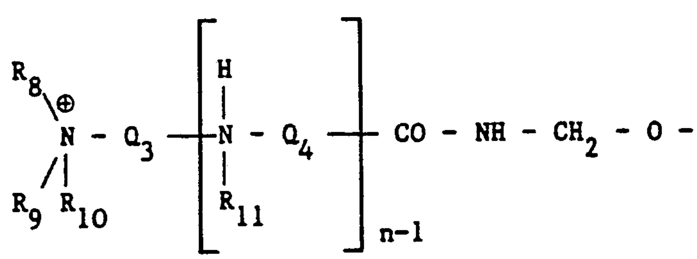

auf, worin n 1 oder 2, $R_8$, $R_9$, $R_{10}$ und $R_{11}$ unabhängig voneinander je Wasserstoff, Alkyl, Hydroxyalkyl, Cyanalkyl oder Chloralkyl mit je 1 bis 4 Kohlenstoffatomen, unsubstituiertes oder durch $C_1$—$C_4$-Alkyl substituiertes Cyclopentyl oder Cyclohexyl, unsubstituiertes Benzyl, Chlorbenzyl, unsubstituiertes Phenyl, Nitrophenyl oder Chlorphenyl oder $R_8$ und $R_9$ zusammen mit dem sie verbindenden Stickstoffatom und gegebenenfalls einem Sauerstoffatom einen Pyrrolidinium-, Piperidinium- oder Morpholiniumring oder, $R_{10}$ und $R_{11}$ zusammen mit der sie verbindenden Gruppierung

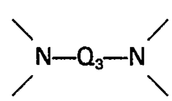

und gegebenenfalls weiteren Heteroatomen einen Imidazolinium-, Benzimidazolinium-, Piperazinium-, Triazinium- oder Mono- oder Dichlortriaziniumring bilden und $Q_3$ und $Q_4$ unabhängig voneinander je Alkylen mit 2 oder 3 Kohlenstoffatomen bedeuten.

Im Vordergrund des Interesses stehen kationisch modifizierte Cellulosematerialien, deren basische Reste eine einzige Ammoniumgruppe enthalten, die an der Carbonylgruppe der Gruppierung der Formel (1) über eine Aethylgruppe verbunden ist und als N-Substituenten 2 unsubstituierte Niederalkylreste oder einen durch Hydroxyl substituierten t-Butylrest aufweisen.

Solche modifizierte Cellulosematerialien weisen insbesondere basische Reste der Formel

(5) 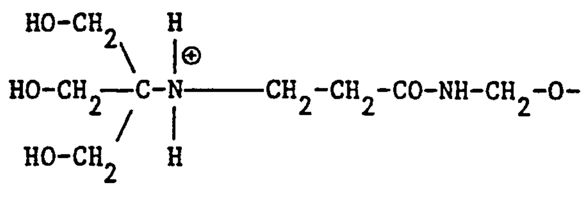

oder

(6) 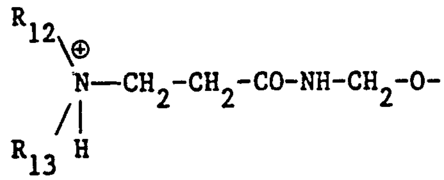

auf, worin $R_{12}$ und $R_{13}$ voneinander verschieden oder vorzugsweise gleich sind und je Isopropyl, vor allem n-Propyl oder insbesondere Aethyl oder Methyl bedeuten.

Sofern die erfindungsgemässen, ionisch modifizierten Cellulosematerialien amphotere Bestandteile aufweisen, die an der Carbonylgruppe der Gruppierung der Formel (1) verknüpft sind, so enthalten solche amphotere bestandteile im allgemeinen zwitterionische Aminosäuregruppen, beispielsweise Aminoessigsäure-(Glycin-), Iminodiessigsäure-, Methylaminoessigsäure- (Sarkosin-), Methylaminopropionsäure-, Iminodipropionsäure-, Iminoessigsäurepropionsäure-, Asparaginsäure-, Aethanolaminoessigsäure-, Vinylbenzyliminodiessigsäure- oder Aethylendiamin-N,N'-dipropionsäuregruppen.

Diese Aminosäuregruppen, z.B. solche der vorstehend angegebenen Art, sind an der Carbonylgruppe mit der Gruppierung der Formel (1) vorzugsweise über eine alkylsubstituierte, phenylsubstituierte oder unsubstituierte Alkylen- oder Phenylenkette und gegebenenfalls zusätzlich ein Sauerstoff- oder Stickstoffatom oder eine sekundäre oder alkylsubstituierte tertiäre Aminogruppe verknüpft.

Die zwitterionische Reste bevorzugter amphoterer Bestandteile der erfindungsgemässen, modifizierten Cellulosematerialien entsprechen somit z.B. der Formel

(7) 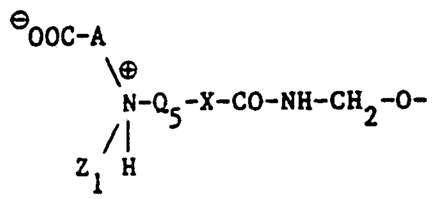 ,

worin X —O—, —S—,

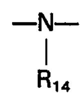

oder die direkte Bindung, $R_{14}$ Wasserstoff oder Alkyl mit 1 bis 4 Kohlenstoffatomen, $Q_5$ einen unsubstituierten oder durch $C_1$—$C_4$-Alkyl oder Phenyl substituierten $C_1$—$C_8$-Alkylen- oder Phenylenrest, $Z_1$ —B—$COO^{\ominus}$, Alkyl mit 1 bis 4 Kohlenstoffatomen oder Wasserstoff und A und B unabhängig voneinander je einen unsubstituierten oder durch $C_1$—$C_4$-Alkyl, $C_1$—$C_4$-Alkoxy oder Phenyl substituierten $C_1$—$C_8$-Alkylenrest bedeuten.

Vorzugsweise stehen X in Formel (7) für die direkte Bindung und $Z_1$ für Niederalkyl, vorzugsweise Methyl oder Aethyl, oder für Wasserstoff. Als bevorzugte Definition von $Q_5$ kommt vor allem unsubstituiertes Niederalkylen in Betracht.

Somit stehen als amphotere, modifizierte Cellulosematerialien solche im Vordergrund des Interesses, die Reste der Formel

(8) 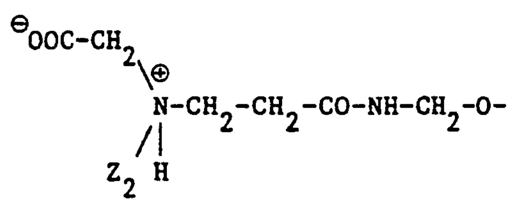

aufweisen, worin $Z_2$ Methyl oder Wasserstoff bedeutet.

Sofern die erfindungsgemässen, modifizierten Cellulosematerialien anionische Bestandteile aufweisen, die an der Carbonylgruppe der Gruppierung der Formel (1) verknüpft sind, so enthalten solche anionische Bestandteile im allgemeinen einen Carboxylrest oder saure Reste einer mehrbasischen, anorganischen, Sauerstoff enthaltenden Säure, beispielsweise den Rest eines Schwefelsäureesters oder Phosphorsäureesters, einen Phosphonsäure- oder Phosphorsäurerest, einen Phosphorsäurehalbesterrest oder einen Sulfonsäurerest. Solche sauren Reste sind an der Carbonylgruppe der Gruppierung der Formel (1) vorzugsweise über eine alkylsubstituierte oder unsubstituierte Alkylen- oder Phenylenkette in der Regel direkt verknüpft.

Die sauren Reste bevorzugter, anionischer Bestandteile der erfindungsgemässen, modifizierten Cellulosematerialien entsprechen somit z.B. der Formel

(9) $$^{\ominus}Y_1—Q_5—CO—NH—CH_2—O—,$$

worin $Y_1^{\ominus}$ Carboxyl oder den Säurerest einer mehrbasischen, anorganischen, Sauerstoff enthaltenden Säure bedeutet und $Q_5$ die angegebenen Bedeutungen hat, wobei saure Reste der Formel

(10) $${}^{\ominus}Y_1—Q_6—CO—NH—CH_2—O—,$$

worin $Q_6$ unsubstituiertes oder durch $C_1$—$C_4$-Alkyl oder Phenyl substituiertes $C_1$—$C_8$-Alkylen bedeutet oder vor allem der Formel

(11) $$Y_2^{\ominus}—Q_7—CO—NH—CH_2—O—,$$

worin $Q_7$ Isopropylen, n-Propylen, vorzugsweise Aethylen oder Methylen und $Y_2^{\ominus}$ —$COO^{\ominus}$, —$SO_3^{\ominus}$

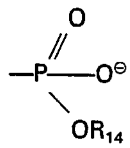 oder 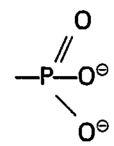

bedeuten und $R_{14}$ die angegebenen Bedeutungen hat, im Vordergrund des Interesses stehen.

Bei der Herstellung des erfindungsgemässen, ionisch modifizierten Cellulosematerials geht man im allgemeinen so vor, dass man das Cellulosepulver der angegebenen Art als Ausgangsmaterial nach an sich bekannter Weise mit einer N-Methylolamidgruppe aufweisenden Verbindung umsetzt. Hierbei werden als N-Methylolverbindungen z.B. solche der Formel

(12) 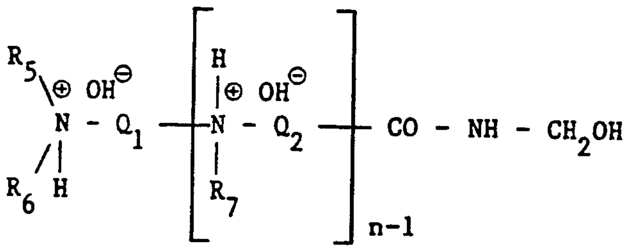 ,

(13) 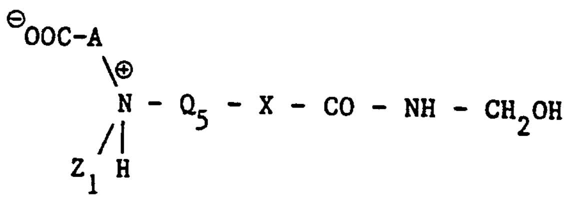

oder

(14) $$H^{\oplus}\ {}^{\ominus}Y_1 - Q_5 - CO - NH - CH_2OH$$

eingesetzt, worin A, $Q_1$, $Q_2$, $Q_5$, $R_5$, $R_6$, $R_7$, X, $Y_1^{\ominus}$, $Z_1$ und n die angegebenen Bedeutungen haben.

Die Verbindungen der Formel (12) sind in den deutschen Offenlegungsschriften 2 650 966 und 2 650 999, die Verbindungen der Formel (13) in der deutschen Offenlegungsschrift 2 727 755 und die Verbindungen der Formel (14) in der deutschen Offenlegungsschrift 2 925 689 beschrieben. Die Herstellung der Verbindungen der Formeln (12), (13) und (14) ist ebenfalls in den genannten deutschen Offenlegungsschriften beschrieben.

In einer weiteren Ausführungsform zur Herstellung des erfindungsgemässen, ionisch modifizierten Cellulosematerials wird, sofern $Q_2$ in Formel (2), $Q_4$ in Formel (4) und $Q_5$ in Formel (7) jeweils für Aethylen und X in Formel (7) für die direkte Bindung stehen, das Cellulosepulver der angegebenen Art zuerst mit Methylolacrylamid als Methylolverbindung (hergestellt aus Acrylamid und Formaldehyd oder einem Formaldehyd abgebenden Mittel, wie z.B. Paraformaldehyd, Hexamethlentetramin oder Trioxan, bei höchstens 100°C, vorzugsweise 20 bis 60°C in wässrigem Medium gegebenenfalls in Gegenwart eines basischen Katalysators wie z.B. Natriumhydroxyd, Natriummethylat oder Magnesiumoxyd) umgesetzt, worauf durch Addition an der Doppelbindung des Zwischenproduktes, welches acrylmodifizierte, an den

Cellulosebestandteil verbundene, nicht-ionische Bestandteile der Formel

(15) $-O-CH_2-NH-CO-CH=CH_2$

aufweist, einer kationischen Verbindung der Formel

(16) 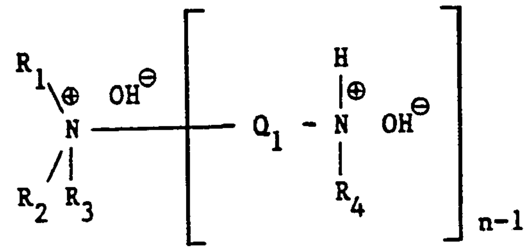 ,

worin n, $R_1$, $R_2$, $R_3$, $R_4$ und $Q_1$ die angegebenen Bedeutungen haben, einer amphoteren Verbindung der Formel

(17) $^{\ominus}OOC-A-\overset{\oplus}{N}H_2-Z_1$ ,

worin A und $Z_1$ die angegebenen Bedeutungen haben, oder einer anionischen Verbindung der Formel

(18) $Y_1^{\ominus}H^{\oplus}$ ,

worin $Y_1^{\ominus}$ die angegebenen Bedeutungen hat, der ionische Bestandteil eingeführt wird.

Als bevorzugte Vertreter der Formel (16) seien z.B. Aminotriazin, Aminodichlortriazin, Imidazol, Benzimidazol, Piperidin, Chloranilin, Anilin und insbesondere Diäthylamin, Diäthanolamin und Tris-(hydroxymethyl)-aminomethan, als bevorzugte Vertreter der Formel (17) Aminoessigsäure und Sarcosin, und als bevorzugte Vertreter der Formel (18) Natriumpyrosulfit erwähnt.

Bevorzugt wird das Cellulosepulver der angegebenen Art mit der Methylolverbindung einer der Formeln (12), (13) oder (14) in wässrigem Medium bei pH 3 bis 6 und 15 bis 25°C während etwa 20 bis 40 Minuten unter Rühren gehalten, dann bei 70 bis 80°C getrocknet und schliesslich einer Wärmebehandlung bei 110 bis 150°C während etwa 1 bis 2 Stunden unterworfen. In einer weiteren, bevorzugten Ausführungsform des Herstellungsverfahrens wird das Cellulosepulver mit Methylolacrylamid als Methylolverbindung in wässrigem Medium bei pH 3 bis 6 und 15 bis 50°C vorzugsweise in Gegenwart eines Polymerisationsinhibitors wie z.B. Hydrochinon während etwa 20 bis 40 Minuten unter Rühren gehalten, dann bei 70 bis 80°C getrocknet, hierauf einer Wärmebehandlung bei 110° bis 150°C während 1 bis 2 Stunden unterworfen, wobei in einer letzten Stufe der ionische Bestandteil durch Addition an die Doppelbindung des acrylmodifizierten Zwischenproduktes einer Verbindung einer der Formeln (16), (17) oder (18) in wässrigem Medium bei pH 7,0 bis 12,5, vorzugsweise 11,0 bis 12,0 und 15 bis 50°C während etwa 4 bis 6 Stunden eingeführt wird und das ionisch modifizierte Cellulosematerial schliesslich bei 70 bis 80°C getrocknet wird. Bei beiden Verfahrensvarianten ist es vorteilhaft, vor der Trocknung bei 70 bis 80°C eine Lagerung des mit der Methylolverbindung imprägnierten Cellulosematerials bei 15 bis 25°C während mindestens 24 Stunden (sogennantes Kaltlagerverfahren) einzuschalten.

Das erfindungsgemässe, ionisch modifizierte Cellulosematerial findet Verwendung zum Reinigen von Abwässern, wie dies für ionisch modifizierte Cellulosematerialien z.B. in der deutschen Offenlegungsschrift 2 650 988 beschrieben ist, und insbesondere zum Trennen von Substanzgemischen, in der Regel als wässrige Lösung, die mindestens einen Anteil ionischer Komponenten aufweisen. Das an sich bekannte, chromatographische Trennverfahren solcher Substanzgemische zeichnet sich dadurch aus, dass die erfindungsgemässe, ionisch modifizierte Cellulosematerial, das ein Ionenauschvermögen aufweist, als stationäre Phase eingesetzt wird. Hierbei wird das ionisch modifizierte Cellulosematerial z.B. ansatzweise im sogenannten "Batchverfahren" (auch "Satz-Betrieb" genannt) eingesetzt. Auch das sogenannte "kontinuierliche Fliessbettverfahren" kommt in Betracht. Bevorzugt wird jedoch das ionisch modifizierte Cellulosematerial als stationäre Phase von chromatographischen Trennsäulen (im sogenannten "Saulenverfahren") verwendet. Im Fliessbettverfahren wird die stationäre Phase ständig in Bewegung gehalten, im Gegensatz zum Festbettverfahren, das z.B. im Satzbetrieb oder Säulenverfahren angewendet wird. Als chromatographisches Trennverfahren im Sinne der vorliegenden Erfindung ist ein reversibles Verfahren zu verstehen, bei welchem nach der Trennung die getrennten Substanzen aus der stationären Phase zurückgewonnen werden können und das Trennmaterial durch Regeneration wieder in seine ursprüngliche Arbeitsform zurückgeführt werden kann (vgl. z.B. Seiten 3 bis 24 der Monographie "Ionenaustauscher" von K. Dorfner, 3. Aufl. 1970, W. de Gruyter & Co.).

Vor allem organische Substanzgemische jeglicher Zusammensetzung können in ihre Komponenten aufgretrennt werden, sofern mindestens eine der Komponenten der Substanzgemische kationisch,

anionisch oder amphoter geladen ist. Hierbei eignen sich zur Trennung kationischer Substanzen vor allem anionisch modifizierte Cellulosematerialien und zur Trennung anionischer Substanzen vor allem kationisch modifizierte Cellulosematerialien. Amphoter modifizierte Cellulosematerialien eignen sich indessen zum Trennen sowohl kationischer als auch anionischer Substanzen. Amphothere Substanzen lassen sich mit anionisch, kationisch oder amphother modifizierten Cellulosematerialien trennen. Als Beispiele möglicher Substanzgemische seien u.a. technische Gemische von Farbstoffen, Pharmazeutika (Anreichung oder Reinigung von Fermentationsbrühen), Kunststoffadditiven, Textilhilfsmitteln, Netzmitteln und Dispergatoren wie z.B. Ligninderivaten erwähnt. Insbesondere Aminosäuregemische, wie sie z.B. in Präparaten von rohem Cephalosporin C-Natriumsalzen vorliegen, können mittels der Ionenaustausch-Chromatographie unter Verwendung des erfindungsgemässen, ionisch modifizierten, vorzugsweise amphoter und insbesondere kationisch modifizierten Cellulosematerials als stationäre Phase gereinigt werden. So beschreibt z.B. W. Voser im Artikel "Isolation of Hydrophobic Fermentation Products by Adsorption Chromatography" in J. Chem. Techn. Biotechnology Band 32, Seiten 109 bis 118 (1982) eine Apparatur und eine Arbeitsweise zur chromatographischen Trennung von Cephalosporin C-Natriumsalzen mit makroporösen Ionenaustauschern, wie z.B. AMBERLIT XAD®, die für die chromatographische Trennung von Cephalosporin C-Natriumsalzen mit dem erfindungsgemässen ionisch modifizierten Cellulosematerial auch angewendet werden können.

Als Verwendung des erfindungsgemässen, ionisch modifizierten, insbesondere kationisch modifizierten Cellulosematerials, sei insbesondere die chromatographische Trennung von Ligninsulfonaten erwähnt, die in Schwarzlaugen des Holzaufschlusses für die Papierherstellung (Kraftprozess) oder in Sulfitablaugen des Holzaufschlusses (Sulfitprozess) enthalten sind. Durch die Isolierung der Komponenten der Ligninsulfonatgemische können nämlich u.a. wertvolle Dispergatoren und Produkte auf Polysaccharidbasis gewonnen werden. Solche Ligninsulfonatgemische sind im Handel unter den Markennamen wie z.B. ATTISOL I und II®, MARASPERSE®, DYNASPERSE®, LIGNOSOL DIO®, BORRESPERSE N®, POLYFON O und H® und REAX 80L, 81A, 82, 83A, 85A und 88B® erhältlich.

Auch die chromatographische Trennung von Ligninaminen, d.h. von Umsetzungsprodukten aus Lignin und Diäthylamin, die im Handel erhältlich sind (z.B. INDULIN® Marken), mit den erfindungsgemässen, ionisch, vor allem anionisch modifizierten Cellulosematerialien ist von besonderem Interesse. Solche Ligninamine sind z.B. als Emulgatorzusätze für Bitumenemulsionen bekannt und für den Strassenbau von Bedeutung.

Ebenfalls können handelsübliche Huminsäuren, z.B. solche mit Molekulargewichten von 600—1000 der Fa. FLUKA, unter Verwendung der erfindungsgemässen ionisch modifizierten, insbesondere anionisch modifizierten Cellulosematerialien als stationäre Phase chromatographisch abgetrennt werden. Die Trennung von Huminsäure findet bei der Trinkwasseraufbereitung ihre praktische Anwendung.

Der wesentlichste Vorteil der erfindungsgemässen, ionisch modifizierten Cellulosematerialien besteht darin, dass sie dank ihrer guten Trenneigenschaften und ihrem guten Fliessverhalten als stationäre Phase in chromatographischen Trennverfahren einwandfrei einsetzbar sind, wobei unter Verwendung von sowohl alkalischen als auch sauren Elutionsmitteln der ganze pH-Bereich von pH etwa 1 bis etwa 13 ausgenützt werden kann.

In den nachstehenden Herstellungsvorschriften und Beispielen beziehen sich die angegebenen Teile und Prozente auf das Gewicht.

Herstellung von N-Methylolamidgruppen aufweisenden Verbindungen

*Vorschrift A*

264,6 Teilen Diäthylamin (3,6 Mol) werden mit 0,9 Teilen einer 30%igen, wässrigen Natriumhydroxydlösung auf 35°C aufgeheizt. Zur Diäthylaminlösung wird eine Lösung von 256 Teilen Acrylamid (3,6 Mol) und 0,025 Teilen Hydrochinon in 270 Teilen Wasser innerhalb von 4 Stunden gegeben, wobei das Reaktionsgemisch durch Kühlen bei 40°C gehalten wird. Nach beendeter Acrylamidzugabe wird das Reaktionsgemisch auf 55°C aufgeheizt, während 15 Stunden bei dieser Temperatur gehalten, anschliessend auf 20°C gekühlt und mit 30 Teilen einer 37%igen, wässrigen Salzsäurelösung auf den pH-Wert von 9,4 eingestellt. Zum Reaktionsgemisch werden hierauf 352 Teile einer 37%igen, wässrigen Formaldehydlösung (4,34 Mol) gegeben. Das Reaktionsgemisch wird während 24 Stunden bei 20°C gehalten.

Man erhält 1173,5 Teile einer 50%-igen wässrigen, leicht viskosen, bräunlichen Lösung des Umsetzungspruduktes der Formel

(19) 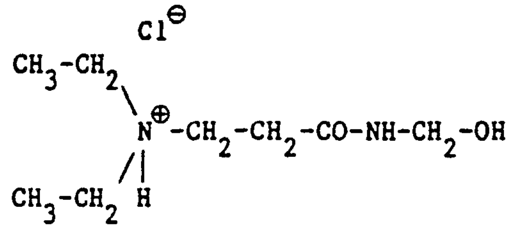 .

*Vorschrift B*

Man verfährt wie in Vorschrift A angegeben, setzt jedoch 380 Teile Diäthanolamin (3,6 Mol) ein. Man erhält 1289 Teile einer 50%igen, wässrigen, leicht viskosen, bräunlichen Lösung des Umsetzungsproduktes der Formel

(20) 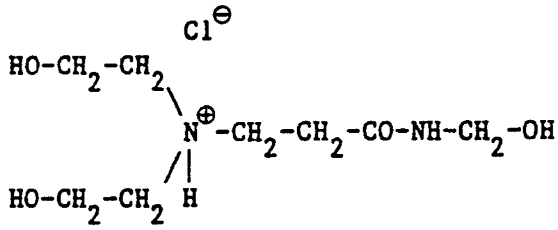 .

*Vorschrift C*

89 Teile Sarcosin (1 Mol) werden bei 20°C in 60 Teilen entionisiertem Wasser gelöst und mit 35 Teilen einer 30%igen, wässrigen Natriumhydroxydlösung auf den pH-Wert von 8,3 gestellt. 71 Teile Acrylamid und 0,025 Teile Hydrochinon werden bei 30°C in 100 Teilen Wasser gelöst. Nun wird die Acrylamidlösung zur Sarcosinlösung innerhalb von 4 Stunden gegeben, wobei die Temperatur des Reaktionsgemisches durch Heizen auf 45°C gehalten wird. Anschliessend wird das Reaktionsgemisch auf 55°C aufgeheizt, während 15 Stunden bei dieser Temperatur unter Rühren gehalten, hierauf mit 162 Teilen einer 37%igen, wässrigen Formaldehydlösung (1 Mol) versetzt und während 16 Stunden bei 55°C stehen gelassen. Man erhält 517 Teile einer 50%igen, wässrigen, leicht viskosen, bräunlichen Lösung des Umsetzungsproduktes der Formel

(21) 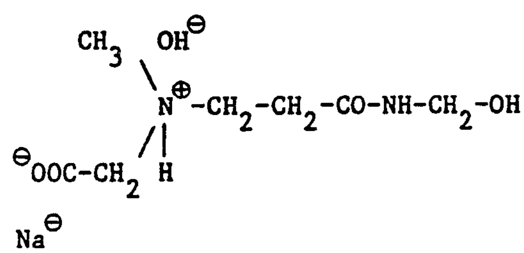 .

*Vorschrift D*

142 Teile Acrylamid (2 Mol) und 190 Teile Natriumpyrosulfit werden in 560 Teilen Wasser gelöst. Der pH-Wert der Lösung beträgt 4,0. Zu dieser Lösung werden 42 Teile einer 30%igen, wässrigen Natriumhydroxydlösung gegeben. Nach dem Zusatz des Natriumhydroxyds beträgt der pH-Wert der Lösung 6,0. Die Reaktionslösung wird nun auf 95°C aufgeheizt, wobei der pH-Wert der Lösung auf 13,0 ansteigt. Durch portionweise Zusatz von insgesamt 175 Teilen einer wäsrigen, 2 N Salzsäurelösung wird der pH-Wert der Lösung auf 6,0 eingestellt. Bei konstantem pH-Wert von 6,0 wird die Reaktionslösung während 75 Minuten bei 95°C unter Rühren gehalten und anschliessend auf 40°C abgekühlt. Bei 40°C wird die Reaktionslösung mit 90 Teilen Paraformaldehyd (3 Mol) versetzt und mit einer 30%igen, wässrigen Natriumhydroxydlösung auf den pH-Wert von 9,5 eingestellt. Die Reaktionslösung wird noch während 16 Stunden bei 40°C und einem pH-Wert von 9,5 unter Rühren gehalten. Man erhält 447 Teile einer klaren, leicht wiskosen, wässrigen Lösung, die 37% der Verbindung der Formel

(22) $Na^{\oplus}SO_3^{\ominus}—CH_2—CH_2—CO—NH—CH_2OH$

enthält.

## Herstellung von ionisch modifizierten Cellulosematerialien

### Beispiel 1

600 Teile eines Cellulosepulvers aus mikrokristalliner Kraft-Cellulose mit einem Polymerisationsgrad von 530, wobei das Pulver aus Teilchen besteht, die eine BET-Oberfläche von 0,88 $m^2/g$ und einen Quellungsgrad in Wasser bei 20°C von 5,6 ml/g aufweisen, werden mit 3000 Teilen der 50%igen wässrigen Lösung des Umsetzungsproduktes gemäss Vorschrift A bei 20°C während 30 Minuten vermischt und hierauf mit einer 37%igen, wässrigen Salzsäurelösung auf den pH-Wert von 3,0 eingestellt. Nach Abfiltrieren der Celluloseanschlämmung wird das imprägnierte Cellulosepulver unter vermindertem Druck bei 70°C getrocknet. Anschliessend wird die Kondensation des Umsetzungsproduktes mit den Hydroxylgruppen der Cellulose während 5 Stunden bei 120°C durchgeführt. Das so behandelte Cellulosepulver wird mit Wasser gewaschen, bis eine Probe des Waschwassers einen pH-Wert von 6 bis 7 aufweist, dann bei 70°C unter vermindertem Druck getrocknet und im Mörser zerkleinert. Man erhält 520 Teile eines gelbstichigen, pulverförmigen, feinkörnigen, kationisch modifizierten Cellulosematerials, das ein

Ionenaustauschvermögen von 0,83 meq/g, einen pK-Wert von 9,4 und sehr gute Durchflusseigenschaften aufweist und modifizierte Celluloseeinheiten der Formel

(23) 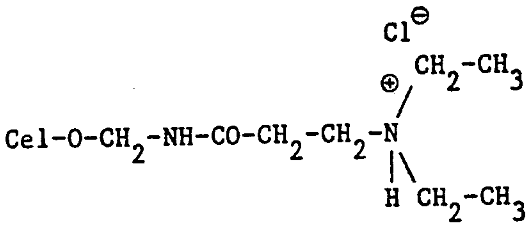

enthält, worin Cel für den Celluloserest steht.

Die Bestimmungsmethode des Ionenaustauschvermögens ist z.B. auf Seite 253 der Monographie "Cellulosic Ion Exchangers" von E. A. Peterson (Aufl. 1980, Elsevier) beschrieben.

Beispiel 2

100 Teile des in Beispiel 1 als Ausgangsmaterial eingesetzten Cellulosepulvers werden mit 500 Teilen einer 50%igen, wässrigen Lösung des Umsetzungsproduktes gemäss Vorschrift A, welche vorgängig mit einer 37%igen, wässrigen Salzsäurelösung auf den pH-Wert von 4,0 eingestellt worden ist, aufgeschlämmt. Diese Cellulose-Anschlämmung wird abfiltriert, das imprägnierte Cellulosematerial als feuchtes Nutschgut während 24 Stunden bei 20°C gelagert und hierauf unter vermindertem Druck bei 80°C getrocknet. Anschliessend wird die Kondensationsreaktion bei 150°C während 45 Minuten durchgeführt. Nach dem Waschen, Trocknen und Zerkleinern des Materials wie in Beispiel 1 angegeben erhält man 122 Teile eines gelbstichigen, pulverförmigen, feinkörnigen, kationisch modifizierten Cellulosematerials, das ein Ionenaustauschvermögen von 0,95 meq/g, einen pK-Wert von 9,5 und sehr gute Durchflusseigenschaften aufweist und modifizierte Celluloseeinheiten der Formel (23) enthält.

Beispiel 3

Man verfährt wie in Beispiel 1 angegeben, setzt jedoch als Ausgangsmaterial ein Cellulosepulver aus mikrokristalliner Kraft-Cellulose mit einem Polymerisationsgrad von 491, wobei dans Pulver aus Teilchen besteht, die eine BET-Oberfläche von 0,98 $m^2/g$ und einen Quellungsgrad in Wasser bei 20°C von 4,0 ml/g aufweisen. Man erhält 150 Teile eines gelbstichigen, pulverförmigen, feinkörnigen, kationisch modifizierten Cellulosematerials, das ein Ionenaustauschvermögen von 0,65 meq/g, einen pK-Wert von 9,4 und sehr gute Durchflusseigenschaften aufweist und modifizierte Celluloseeinheiten der Formel (23) enthält.

Beispiel 4

Man verfährt wie in Beispiel 1 angegeben, setzt jedoch 100 Teile des in Beispiel 1 als Ausgangsmaterial angegebenen Cellulosepulvers und 500 Teile der 50%igen, wässrigen Lösung des Umsetzungsproduktes gemäss Vorschrift B ein und stellt den Ansatz (Cellulose und Umsetzungsproduktlösung) auf den pH-Wert von 3,8 jedoch mit einer wässrigen 0,5 N Salzsäurelösung ein. Man erhält 126 Teile eines gelbstichigen, pulverförmigen, feinkörnigen, kationisch modifizierten Cellulosematerials, das ein Ionenaustauschvermögen von 0,55 meq/g, einen pK-Wert von 8,3 und sehr gute Durchflusseigenschaften aufweist und modifizierte Celluloseeinheiten der Formel

(24) 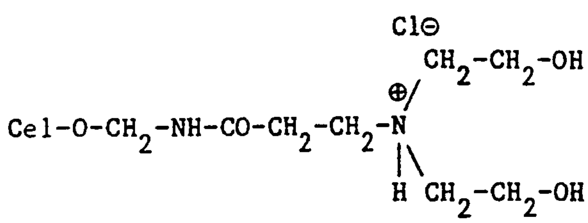

enthält, worin Cel für den Celluloserest steht.

Beispiel 5

100 Teile des in Beispiel 1 als Ausgangsmaterial eingesetzten Cellulosepulvers werden mit 500 Teilen der 50%igen, wässrigen Lösung des Umsetzungsproduktes gemäss Vorschrift B, welche vorgängig mit einer wässrigen, 0,5 N Salzsäurelösung auf den pH-Wert von 3,5 eingestellt worden ist, aufgeschlämmt und während 30 Minuten bei 30°C stehen gelassen. Die Cellulose-Anschlämmung wird abfiltriert, das imprägnierte Cellulosematerial als feuchtes Nutschgut während 24 Stunden bei 20°C gelagert und hierauf unter vermindertem Druck bei 70°C getrocknet. Anschliessend wird die Kondensationsreaktion bei 130°C während 90 Minuten durchgeführt. Nach dem Waschen, Trocknen und Zerkleinern des Materials wie in Beispiel 1 angegeben erhält man 127 Teile eines gelbstichigen, pulverförmigen, feinkörnigen, kationisch

modifizierten Materials, das ein Ionenaustauschvermögen von 0,55 meq/g, einen pK-Wert von 8,3 und sehr gute Durchflusseigenschaften aufweist und modifizierte Celluloseeinheiten der Formel (24) enthält.

Beispiel 6

15 Teile des in Beispiel 1 als Ausgangsmaterial eingesetzten Cellulosepulvers werden mit 90 Teilen der 40%igen, wässrigen Lösung des Umsetzungsproduktes gemäss Vorschrift C bei 20°C vermischt und mit einer 37%igen, wässrigen, Salzsäurelösung auf den pH-Wert von 3,0 eingestellt. Anschliessend wird das Reaktionsgemisch während 30 Minuten bei 20°C unter Rühren gehalten. Nach Abfiltrieren der Celluloseanschlämmung wird das imprägnierte Cellulosematerial unter vermindertem Druck bei 70°C getrocknet. Die darauffolgende Kondensationsreaktion wird während 6 Stunden bei 130°C durchgeführt. Nach dem Waschen, Trocknen und Zerkleinern des Materials wie in Beispiel 1 angegeben erhält man 17 Teile eines gelbstichigen, pulverförmigen, feinkörnigen, amphoter modifizierten Cellulosematerials, das ein Ionenaustauschvermögen von 0,55 meq/g und sehr gute Durchflusseigenschaften aufweist und modifizierte Celluloseeinheiten der Formel

(25)

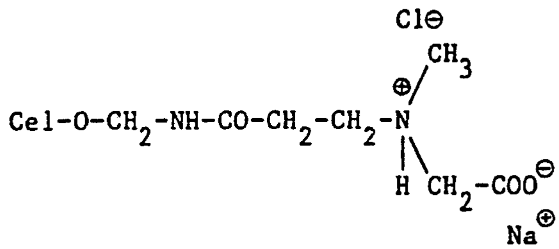

enthält, worin Cel für den Celluloserest steht.

Beispiel 7

*Stufe I*

75 Teile des in Beispiel 1 als Ausgangsmaterial eingesetzten Cellulosepulvers werden mit 340 Teilen einer 60%igen, wässrigen Lösung von Monomethylolacrylamid in 200 Teilen Wasser vermischt. Die Anschlämmung der so imprägnierten Cellulose wird auf 50°C aufgeheizt und mit einer 85%igen, wässrigen Orthophosphorsäurelösung auf den pH-Wert von 3,0 eingestellt. Nach Abfiltrieren der Celluloseanschlämmung wird das impränierte Cellulosematerial unter vermindertem Druck bei 80°C getrocknet. Die Kondensationsreaktion wird dann während 4 Stunden bei 130°C durchgeführt. Nach dem Waschen, Trocknen und Zerkleinern des Materials wie in Beispiel 1 angegeben erhält man 84 Teile eines gelbstichigen, pulverförmigen, acrylmodifizierten Cellulosematerials, das modifizierte Celluloseeinheiten der Formel

(26) $$Cel—O—CH_2—NH—CO—CH{=}CH_2$$

enthält, worin Cel für den Celluloserest steht.

*Stufe II*

35 Teile des nach vorstehend angegebenen Stufe I erhaltenen acrylmodifizierten Cellulosematerials werden in 100 Teile Wasser aufgeschlämmt, auf 50°C aufgeheizt und innerhalb von 60 Minuten bei einem pH-Wert von 11,0 mit 25 Teilen Tris(hydroxymethyl)-aminomethan versetzt. Nach Filtration wird das behandelte Cellulosematerial unter vermindertem Druck bei 70°C getrocknet, mit Wasser neutral gewaschen, wiederum unter vermindertem Druck getrocknet und im Mörser zerkleinert. Man erhält 54 Teile eines gelbstichigen, pulverförmigen, feinkörnigen, kationisch modifizierten Cellulosematerials, das ein Ionenaustauschvermögen von 0,21 meq/g, einen pK-Wert von 5,0 und sehr gute Durchflusseigenschaften aufweist und modifizierte Celluloseeinheiten der Formel

(27)

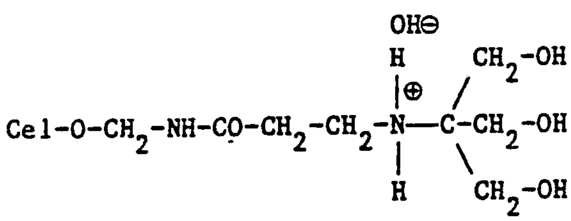

enthält, worin Cel für den Celluloserest steht.

Beispiel 8

*Stufe I*

100 Teile des in Beispiel 1 als Ausgangsmaterial eingesetzten Cellulosepulvers werden mit 500 Teilen einer 60%igen, wässrigen Monomethylolacrylamidlösung und 2 Teilen Hydrochinon vermischt. Dises Gemisch wird mit einer wässrigen 1 N Salzsäurelösung auf den pH-Wert von 3,5 eingestellt und während 30 Minuten unter leichtem Rühren bei 20°C gehalten. Hierauf wird die Anschlämmung abfiltriert. Das noch feuchte, imprägnierte Cellulosematerial wird während 24 Stunden bei 20°C gelagert und anschliessend unter vermindertem Druck während 5 Stunden bei 70°C getrocknet. Die Kondensationsreaktion wird dann während 60 Minuten bei 130°C durchgeführt. Man erhält 115 Teile eines gelbstichigen, pulverförmigen, acrylmodifizierten Cellulosematerials, das modifizierte Celluloseeinheiten der Formel (26) enthält.

*Stufe II*

15 Teile des nach vorstehend angegebenen Stufe erhaltenen acrylmodifizierten Cellulosematerials weden in 30 Teilen entionisiertem Wasser aufgeschlämmt. Zu dieser Anschlämmung werden innerhalb von 20 Minuten 40 Teile einer 50%igen, wässrigen Diäthylaminlösung gegeben, wobei die Temperatur des Reaktionsgemisches von selber auf 30°C steigt und sich ein pH-Wert von 12 einstellt. Hierauf wird die Anschlämmung auf 55°C aufgeheitzt, während 5 Stunden bei dieser Temperatur gehalten und abfiltriert. Nach dem Waschen, Trocknen und Zerkleinern des Materials wie in Beispiel 1 angegeben erhält man 20 Teile eines gelbstichigen, pulverförmigen, feinkörnigen, kationisch modifizierten Cellulosematerials, das ein Ionenaustauschvermögen von 0,70 meq/g, einen pK-Wert von 8,3 und sehr gute Durchflusseigenschaften aufweist und modifizierte Celluloseeinheiten der Formel (23) enthält.

Beispiel 9

15 Teile des nach Stufe I des Beispiels 8 erhaltenen acrylmodifiziertien Cellulosematerials werden in 50 Teilen einer 50%igen, wässrigen Sarcosinlösung aufgeschlämmt. Zu dieser Anschlämmung werden innerhalb von 45 Minuten 45 Teile einer 30%igen, wässrigen Natriumhydroxydlösung gegeben, wobei die Temperatur des Reaktionsgemisches von selber auf 30°C steigt und sich ein pH-Wert des Reaktionsgemisches von 12,5 einstellt. Hierauf wird die Anschlämmung auf 55°C aufgeheizt, während 5 Stunden bei dieser Temperatur gehalten und abfiltriert. Nach dem Waschen, Trocknen und Zerkleinern des Materials wie in Beispiel 1 angegeben erhält man 24 Teile eines gelbstichigen, pulverförmigen, feinkörnigen, amphoter modifizierten Cellulosematerials, das ein Ionenaustauschvermögen von 0,29 meq/g und sehr gute Durchflusseigenschaften aufweist, und modifizierte Celluloseeinheiten der Formel

(28)

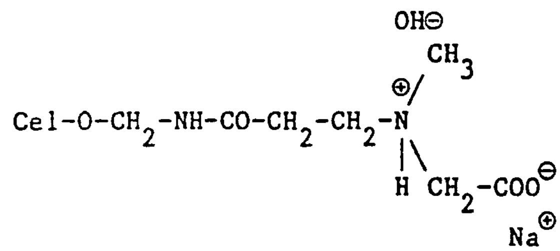

enthält, worin Cel für den Celluloserest steht.

Beispiel 10

15 Teile des nach Stufe I des Beispiels 8 erhaltenen acrylmodifizierten Cellulosematerials werden in 66,8 Teilen einer 50,6%igen, wässrigen Tris(hydroxymethyl)-aminomethan-Lösung aufgeschlämmt. Diese Anschlämmung wird mit einer 30%igen, wässrigen Natriumhydroxylösung auf den pH-Wert von 12,5 eingestellt, auf 55°C aufgeheizt, während 4 Stunden bei dieser Temperatur gehalten und abfiltriert. Nach dem Waschen, Trocknen und Zerkleinern des Materials wie in Beispiel 1 angegeben erhält man 24 Teile eines gelbstichigen, pulverförmigen, feinkörnigen, kationisch modifizierten Cellulosematerials, das ein Ionenaustauschvermögen von 0,15 meq/g, einen pK-Wert von 5 und sehr gute Durchflusseigenschaften aufweist und modifizierte Celluloseeinheiten der Formel (27) enthält.

Beispiel 11

20 Teile des in Beispiel 1 als Ausgangsmaterial eingesetzten Cellulosepulvers werden mit 1135 Teilen der 37%igen, wässrigen lösung des Umsetzungsproduktes gemäss Vorschrift D vermischt. Die erhaltene Celluloseaufschlämmung wird während 30 Minuten bei 20°C unter Rühren gehalten und dann abfiltriert. Das so imprägnierte Cellulosematerial wird unter vermindertem Druck bei 70°C getrocknet. Die anschliessende Kondensationsreaktion wird bei 130°C während 75 Minuten durchgeführt. Nach dem Waschen, Trocknen und Zerkleinern des Materials, wie in Beispiel 1 angegeben, erhält man 185 Teile eines gelblichen, pulverförmigen, feinkörnigen, anionisch modifizierten Cellulosematerials, das ein Ionenaustauschvermögen von 2,7 meq/g und sehr gute Durchflusseigenschaften aufweist und modifizierte Celluloseeinheiten der Formel

(29) $Cel{-}O{-}CH_2{-}NH{-}CO{-}CH_2{-}CH_2{-}SO_3^{\ominus}Na^{\oplus}$

enthält, worin Cel für den Celluloserest steht.

Beispiel 12

20 Teile des in Beispiel 1 als Ausgangsmaterial eingesetzten Cellulosepulvers werden mit 100 Teilen einer wässrigen Lösung unter Rühren während 15 Minuten vermischt, die 40% 3-(Dimethylphosphono)-N-hydroxymethylpropionamid enthält. Diese Verbindung wird aus Trimethylphosphit, Acrylamid und Formaldehyd hergestellt und ist u.a. in der deutschen Offenlegungsschrift 1 469 281 als Flammschutzmittel für z.B. Baumwollgewebe beschrieben. Die Celluloseanschlämmung wird mit einer 37%igen wässrigen Salzsäurelösung auf den pH-Wert von 3,0 eingestellt und bei 20°C während 30 Minuten unter Rühren gehalten. Das so imprägnierte Cellulosepulver wird unter vermindertem Druck bei 70°C getrocknet. Anschliessend wird die Kondensationsreaktion bei 130°C während 75 Minuten durchgeführt. Das Cellulosepulver wird anschliessend in 100 Teilen einer wässrigen, 30%igen Natriumhydroxydlösung aufgeschlämmt, unter Rühren auf die Rückflusstemperatur von ca. 98°C aufgeheizt und während einer Stunde bei dieser Temperatur gehalten. Nach dem Waschen (bis neutralem pH des Waschwassers), Trocknen und Zerkleinern des Materials wie in Beispiel 1 angegeben, erhält man 19 Teile einer weissen, pulverförmigen, feinkörnigen, anionisch modifizierten Cellulosematerials, das ein Ionenaustauschvermögen von 1,8 meq/g und sehr gute Durchflusseigenschaften aufweist und modifizierte Cellulose-einheiten der Formel

(30) 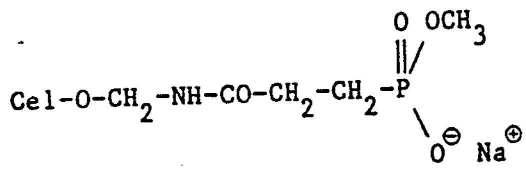

enthält, worin Cel für den Celluloserest steht.

Neben den modifizierten Celluloseeinheiten der Formel (30) als Hauptbestandteil enthält das anionisch modifizierte Cellulosematerial geringe Mengen an Celluloseeinheiten der Formel

(31) 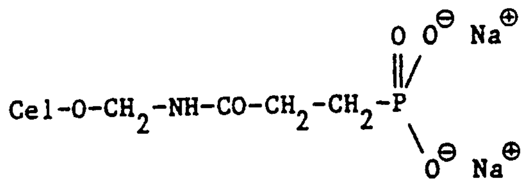 ,

worin Cel für den Celluloserest steht.

Applikationsbeispiele

Beispiel 13

Eine Chromatographiesäule mit einem Durchmesser von 1,27 cm wird mit 7,0 g des kationisch modifizierten Cellulosematerials gemäss Beispiel 5 (entsprechend 45 ml Cellulosematerial und einer Füllhöhe von 33 cm) gefüllt. Nun wird mit einer Durchflussgeschwindigkeit von 50 $ml \cdot h^{-1} \cdot cm^{-2}$ bei 0,01 bar. 250 ml einer 1,42%igen, wässrigen Lösung von rohem Cephalosporin C Natriumsalz durch die Säule perkoliert. Der bei 425 nm in einer 1 cm Zelle gemessene Absorptionswert der stark braunstichigen Lösung vor dem Perkolieren beträgt 1,65, während das Perkolat einen Absorptionswert von nur 0,935 aufweist. Die Ausbeute an perkoliertem, gereinigtem Cephalosporin C Natriumsalz, bezogen auf rohem Natriumsalz, beträgt 95,5%.

Aehnliche Ergebnisse werden erzielt, wenn man anstelle des Cellulosematerials gemäss Beispiel 5 das kationisch modifizierte Cellulosematerial gemäss einem der Beispiele 1 bis 4, 7 (Stufe II), 8 (Stufe II) oder 10 oder das amphoter modifizierte Cellulosematerial gemäss einem der Beispiele 6 oder 9 einsetzt.

Beispiel 14

7 g des kationisch modifizierten Cellulosematerials gemäss Beispiel 2 werden in 70 ml destilliertem Wasser aufgeschlämmt und während 30 Minuten unter Rühren bei 20°C gehalten. Der pH-Wert der Anschlämmung beträgt 6,0. Die Anschlämmung wird nun in eine Chromatographiesäule aus Glas (Durchmesser 1,27 cm, Länge 33 cm) eingefüllt. Das homogene Bett des Cellulosematerials als stationäre Phase weist ein Volumen von 40 ml auf (Füllhöhe 31,5 cm). Bei einer Durchflussgeschwindigkeit von 700 ml $h^{-1}cm^{-2}$ (Gegendruck der Säule 2 bis 3 bar) wird das Cellulosematerial zuerst während einer Stunde mit destilliertem Wasser gespült, dann mit einer wässrigen, 0,1 N Salzsäurelösung aktiviert und hierauf mit Wasser neutral gewaschen. Nun wird die Säule mit 5 ml einer 0,5%igen, wässrigen Lösung eines handelsüblichen Ligninsulfonatgemisches aus Holzaufschluss, die einen pH-Wert von 10,0 aufweist, beschickt. Bei einer Durchflussgeschwindigkeit von $100 \cdot h^{-1}cm^{-2}$ werden alle Komponenten des Ligninsulfonatgemisches auf dem Cellulosematerial zurückgehalten.

Nun werden die Komponenten des Ligninsulfonatgemisches mit mehreren Elutionsmitteln mit steigenden Elektrolytkonzentrationen in der mobilen Phase aus dem Cellulosematerial als stationärer Phase chromatographisch getrennt. Zu diesem Zweck wird ein Fraktionssammler eingesetzt, der das Eluat in Fraktionen von jeweils 4 ml abtrennt, wobei die Durchflussgeschwindigkeit der flüssigen Phase durch die stationäre Phase $100 \cdot ml \cdot h^{-1} cm^{-2}$ beträgt. Die Absorption jeder der 4 ml Fraktionen werden bei 250 nm gemessen, um einen Konzentrationsvergleich bezüglich Komponenten des Ligninsulfonatgemisches zu ermöglichen. Die Fraktionen, die keine Absorption aufweisen, werden verworfen. Die Absorption aufweisenden Fraktionen werden gesammelt. Es werden somit im Verlauf des Trennvorgangs 5 Komponenten des Ligninsulfonatgemisches eluiert. Der Verlauf der chromatographischen Trennung des Ligninsulfonatgemisches mit den verwendeten Elutionsmitteln wird in der nachfolgenden Tabelle I angegeben:

Tabelle I

| Elutionsmittel (wässrige Lösungen), pH-Wert | ml Eluat | Lauf Nr. der 4 ml Fraktionen | eluierte Komponenten Nr. | Volumen ml | % des Gemisches |
|---|---|---|---|---|---|
| NaCl 0,17 N | 20 | 1 - 5 | - | - | - |
| pH 7,0 | 20 | 6 - 10 | I | - | 8 |
| | 80 | 10 - 20 | - | - | - |
| NaCl 1 N | 100 | 25 | - | - | - |
| pH 7,0 | 120 | 25 - 30 | II | 20 | 14 |
| | 160 | 40 | - | - | - |
| NaCl 2 N | 200 | 50 | - | - | - |
| pH 7,0 | | | | | |
| 10%iger Tris(hydroxy-methyl)-amino-methan-Puffer | 232 | 58 | - | - | - |
| in $H_2O$ dest. | 272 | 59 - 68 | III | 40 | 21,5 |
| pH 10,5 | 280 | 70 | - | - | - |
| 0,4%ige $NH_3$-Lösung | 300 | 75 | - | - | - |
| pH 11,2 | 340 | 76 - 85 | IV | 40 | 21,5 |
| | 380 | 90 | - | - | - |
| 7,5%ige $NH_3$-Lösung | 380 | 95 | - | - | - |
| pH 12,3 | 420 | 96 - 105 | V | 40 | 35 |
| | 440 | 110 | - | - | - |

Im IR-Spektrum weisen die schwach polare Komponente I (8% des ursprünglichen Ligninsulfonatgemisches) die charakteristische —C=O Bande, die Komponente II (14% des Gemisches) neben phenolischen Gruppen die charakteristische —$COO^{\ominus}$ Bande und die Komponente III (21,5% des Gemisches) die charakteristischen, polaren $SO_3^{\ominus}$ und $SO_3Na$ Banden auf. Aufgrund ihres chromatographischen Verhaltens stellen, den höheren pH-Werten der mobilen Phase entsprechend, die Komponente IV (21,5% des Gemisches) eine polare Ligninsulfonatfraktion und die Komponente V (35% des Gemisches) eine sehr polare, hoch sulfonierte Ligninfraktion dar.

Nach abgeschlossener Trennung des Ligninsulfonatgemisches mit insgesamt 440 ml Elutionsmittel wird das Cellulosematerial in der Chromatographiesäule mit ca. 100 ml einer wässrigen, 0,1 N Salzsäurelösung gespült, bis das Eluat einen pH-Wert von 1 bis 2 aufweist. Nach dem Waschen des Cellulosematerials mit ca. 100 ml Wasser, bis das Eluat einen pH-Wert von 5,5 aufweist, steht das Cellulosematerial als regenerierte, stationäre Phase für weitere chromatographische Trennungen bereit.

Aehnliche Ergebnisse werden erzielt, wenn man als stationäre Phase der Chromatographiesäule das kationisch modifizierte Cellulosematerial gemäss einem der Beispiele 1, 3, 4, 5 oder 8 (Stufe II) einsetzt.

### Beispiel 15

7 g des anionisch modifizierten Cellulosematerials gemäss Beispiel 11 werden in 70 ml destilliertem Wasser aufgeschlämmt und während 30 Minuten unter Rühren bei 20°C gehalten. Der pH-Wert der Anschlämmung beträgt 8,0. Die Anschlämmung wird nun in eine Chromatographiesäule aus Glas (Durchmesser 1,27 cm, Länge 33 cm) eingefüllt. Das homogene Bett des Cellulosematerials als stationäre Phase weist ein Volumen von 39 ml auf (Füllhöhe 31 cm). Bei einer Durchflussgeschwindigkeit von 700 ml $h^{-1}cm^{-2}$ (Gegendruck der Säule 1 bis 2 bar) wird das Cellulosematerial zuerst während einer Stunde mit destilliertem Wasser gespült. Nun wird die Säule mit 5 ml einer 0,5%igen, wässrigen Lösung eines handelsüblichen Ligninamingemisches die einen pH-Wert von 8,7 aufweist, beschickt. Bei einer Durchflussgeschwindigkeit von 100 ml $h^{-1}cm^{-2}$ werden alle Komponenten des Ligninamingemisches auf dem Cellulosematerial zurückgehalten.

Nun werden die Komponenten des Ligninamingemisches mit mehreren Elutionsmitteln mit steigenden pH-Werten als mobiler Phase aus dem Cellulosematerial als stationärer Phase chromatographisch getrennt. Zu diesem Zweck wird wie in Beispiel 14 angegeben unter Einsatz eines Franktionssammlers verfahren, wobei die Absorptionsmessung der 4 ml Fraktionen ebenfalls bei 250 nm erfolgt. Der Verlauf der chromatographischen Trennung des Ligninamingemisches wird in der nachfolgenden Tabelle II angegeben. Für pH-Wert des Elutionsmittels von 6, 7 und 8, werden Phosphatpuffer nach Sörensen, für pH-Werte von 8, 5, 9 und 10 Boraxpuffer und für den pH-Wert 12,3 eine wässrige Ammoniaklösung eingesetzt.

Tabelle II

| PH-Wert des Elutionsmittels | ml Eluat | Fraktionen | |
|---|---|---|---|
| | | Nr. | % des Gemisches |
| 6,0 | 100 | I | 8 % |
| 7,0 | 200 | II | 7 % |
| 8,0 | 300 | III | 19 % |
| 8,5 | 400 | IV | 20 % |
| 9,0 | 500 | V | 23 % |
| 10,0 | 600 | VI | 15 % |
| 12,3 | 700 | VII | 8 % |

Fraktion I ist praktisch nicht polar. Fraktion II weist die kleinste und Fraktion VII die grösste Polarität auf, wobei die Polarität der Fraktionen II bis VII kontinuierlich zunimmt.

Nach abgeschlossener Trennung des Ligninamingemisches mit insgesamt 700 ml Elutionsmittel wird das Cellulosematerial in der Chromatographiesäule mit ca. 100 ml einer wässrigen, 0,1 N Natriumhydroxydlösung gespült, bis das Eluat einen pH-Wert von 12 bis 13 aufweist. Nach dem Waschen des Cellulosematerials mit ca. 100 ml Wasser, bis das Eluat einen pH-Wert von 8 bis 8,5 aufweist, steht das Cellulosematerial als regenerierte, stationäre Phase für weitere chromatographische Trennungen bereit.

Aehnliche Ergebnisse werden erzielt, wenn man als stationäre Phase der Chromatographiesäule das anionisch modifizierte Cellulosematerial gemäss Beispiel 12 einsetzt.

Beispiel 16

7 g kationisch modifizierten Cellulosematerials gemäss Beispiel 1 werden in 60 ml destilliertem Wasser aufgeschlämmt und während 30 Minuten unter Rühren bei 20°C gehalten. Der pH-Wert der Anschlämmung beträgt 6,0. Die Anschlämmung wird nun in eine Chromatographiesäule aus Glas (Durchmesser 1,3 cm, Länge 30 cm) eingefüllt. Das homogene Bett des Cellulosematerials weist ein Volumen von 29 ml auf (Füllhöhe 22 cm). Die erhaltene Säule hat eine Durchflussgeschwindigkeit von 720 $ml \cdot h^{-1} \cdot cm^{-2}$ bei einem Gegendruck von 1,5 bar. Die Säule wird wie in Beispiel 14 angegeben aktiviert und dann gewaschen.

Nun wird die Säule mit einer wässrigen Lösung beschickt, die 1% einer Huminsäure enthält. Die eingesetzte Huminsäure hat ein Molekulargewicht von 600 bis 1000 und einen Aschengehalt von 10 bis 15% (Provenienz FLUKA, Katalog Nr. 53680, Aufl. 1984). Die Huminsäurelösung wird durch die Säule durchgepumpt, bis am Ausfluss der Säule die gegenwart von Huminsäure mittels eines UV-Detektors (Messung bei 240 nm) festgestellt wird.

Die Abtrennung der Huminsäure wird durch Elution mit einer wässrigen Ammoniaklösung durchgeführt, die einen pH-Wert von 12,3 aufweist. Der Elutionsvorgang wird fortgesetzt, bis der UV-Detektor am Ausfluss der Säule die Abwesenheit von Huminsäure anzeigt.

Aufgrund des Gehalts an Huminsäure vor und nach dem Durchfluss durch die Säule kann die Belastbarkeit des kationisch modifizierten Cellulosematerials berechnet werden. Sie beträgt 50 mg Huminsäure pro g Trennmaterial.

Zur Regeneration wird die Säule mit destilliertem Wasser nachgewaschen, bis der pH-Wert des Waschwassers 7 bis 8 beträgt, dann mit einer wässrigen 0,1 N Salzsäurelösung gewaschen, bis der pH-Wert des Eluats 1,0 beträgt und anschliessend nochmals mit 50 ml destilliertem Wasser nachgewaschen.

Nach der Regeneration wird die Säule wie vorstehend angegeben nochmals mit der wässrigen, 1%igen Huminsäurelösung beschickt.

Die Belastbarkeit beträgt nach einem Regenerationsschritt 40 mg Huminsäure pro g Trennmaterial.

Der Regenerationsschritt und die Trennung der Huminsäurelösung wird nochmals wiederholt.

Die Belastbarkeit beträgt dann nach zwei Regenerationsschritten 37 mg Huminsäure pro g Trennmaterial.

Beispiel 17

Man verfährt wie in Beispiel 16 angegeben, setzt jedoch als Trennmaterial das kationisch modifizierte Cellulosematerial gemäss Beispiel 4.

Die Belastbarkeit beträgt 36 mg und nach einem Regenerationsschritt 30 mg Huminsäure pro g Trennmaterial.

Beispiel 18

85 mg der in Beispiel 16 eingesetzten Huminsäure wird in 500 ml destilliertem Wasser gelöst. Unter Rühren wird 1 g des kationisch modifizierten Cellulosematerials gemäss Beispiel 1 zur Huminsäurelösung gegeben. Der Ansatz wird bei 20°C während 20 Minuten unter Rühren gehalten. Nach Stehenlassen des Ansatzes kann durch Messung der UV-Absorption bei 250 nm die noch in Lösung befindliche Huminsäure bestimmt, werden und die Menge Huminsäure berechnet werden, die durch das Cellulosematerial aus der Lösung entfernt wird.

Diese Menge beträgt 42 mg Huminsäure pro g Cellulosematerial.

Beispiel 19

Man verfährt wie in Beispiel 18 angegeben, hält der Ansatz (Huminsäurelösung und kationisch modifiziertes Cellulosematerial) unter Rühren während 20 Minuten jedoch bei 40°C. Die Menge zurückgehaltene Huminsäure beträgt 57 mg pro g Cellulosematerial.

*Vergleichsversuch I:*

Man verfährt wie in Beispiel 2 angegeben, setzt jedoch an Stelle des Cellulosepulvers gemäss Beispiel 1 als Ausgangsmaterial ein Cellulosepulver ein, das aus Teilchen besteht, die eine BET-Oberfläche von 2,82 $m^2/g$ und einen Quellungsgrad im Wasser von 9 ml/g aufweisen, wobei der Polymerisationsgrad der Cellulose 329 beträgt. Das so hergestellte kationisch modifizierte Cellulosematerial wird wie in Beispiel 14 angegeben als stationäre Phase einer Chromatographiesäule eingesetzt. Die erhaltene Chromatographiesäule verstopft, wobei der applizierte Gegendruck bis 300 bar steigt. Die Chromatographiesäule ist deshalb unbrauchbar.

*Vergleichsversuch II:*

Man verfährt wie in Beispiel 2 angegeben, setzt jedoch an Stelle des Cellulosepulvers gemäs Beispiel 1 als Ausgangsmaterial ein Cellulosepulver ein, das aus Teilchen besteht, die eine BET-Oberfläche von 0,70 $m^2/g$ und einen Quellungsgrad im Wasser von 7 ml/g aufweisen, wobei der Polymerisationsgrad der Cellulose 148 beträgt. Das so hergestellte kationisch modifizierte Cellulosematerial wird wie in Beispiel 14 angegeben, als stationäre Phase einer Chromatographiesäule eingesetzt. Die erhaltene Chromatographiesäule hat eine Durchflussgeschwindigkeit von nur 300 $ml \cdot h^{-1} \cdot cm^{-2}$, wobei der applizierte Gegendruck bis 50 bar steigt. Das Schlechte Fliessverhalten der Säule bewirkt schlechte Trenneigenschaften der stationären Phase. Die Säule kann somit nicht für chromatographische Trennverfahren eingesetzt werden.

**Patentansprüche**

1. Ionisch modifiziertes Cellulosematerial aus pulverförmiger mikrokristalliner Cellulose, dessen ionischer Bestandteil über die Gruppierung der Formel

$$-O-CH_2-NH-CO-$$

an den Celluloseteil gebunden ist, wobei die Carbonylgruppe mit dem ionischen Bestandteil des Materials und das Sauerstoffatom mit dem Celluloseanteil des Materials verbunden sind, dadurch gekennzeichnet, dass man als Ausgangsstoff mikrokristalline Holz-Cellulose in Pulverform einsetzt, wobei die Cellulose einen Polymerisationsgrad von 490 bis 550 besitzt und das Cellulosepulver aus Teilchen besteht, die eine spezifische BET-Oberfläche von 0,8 bis 1,1 $m^2/g$ und einen Quellungsgrad in Wasser bei 20°C von 4 bis 6 ml/g aufweisen.

2. Verfahren zur Herstellung von ionisch modifiziertem Cellulosematerial gemäss Anspruch 1 durch Behandlung von Cellulose mit einer N-Methylolamidgruppe aufweisenden Verbindung, dadurch gekennzeichnet, dass man als Ausgangsstoff mikrokristalline Holz-Cellulose in Pulverform einsetzt, wobei die Cellulose einen Polymerisationsgrad von 490 bis 550 besitzt und das Cellulosepulver aus kugelförmigen Teilchen besteht, die eine spezifische BET-Oberfläche von 0,8 bis 1,1 $m^2/g$ und einen Quellungsgrad in Wasser bei 20°C 4 bis 6 ml/g aufweisen.

3. Verwendung des Cellulosematerials gemäss Anspruch 1 zum Trennen von Substanzgemischen, wobei mindestens ein Teil der Komponenten der Substanzgemische eine ionische Ladung aufweist.

4. Chromatographisches Trennverfahren von Substanzgemischen, wobei mindestens ein Teil der Komponenten der Substanzgemische eine ionische Ladung aufweist, dadurch gekennzeichnet, dass man als stationäre Phase das Cellulosematerial gemäss Anspruch 1 einsetzt.

**Revendications**

1. Matière cellulosique modifiée ioniquement en cellulose microcristalline pulvérulente, dont le constituant ionique est lié à la partie cellulose par le groupement répondant à la formule

$$-O-CH_2-NH-CO-$$

le groupe carbonyle étant lié au constituant ionique de la matière et l'atome d'oxygène à la partie cellulosique de la matière, caractérisée en ce qu'on utilise comme substance de départ une cellulose microcristalline de bois sous forme de poudre, la cellulose possédant un degré de polymérisation de 490 à 550 et la poudre de cellulose étant constituée de particules qui possèdent une surface spécifique BET de 0,8 à 1,1 $m^2/g$ et un degré de gonflement dans l'eau à 20°C de 4 à 6 ml/g.

2. Procédé de préparation d'une matière cellulosique modifiée ioniquement selon la revendication 1, par traitement de la cellulose avec un composé présentant un groupe N-méthylolamide, caractérisé en ce qu'on utilise comme substance de départ une cellulose de bois microcristalline sous forme de poudre, la cellulose possédant un degré de polymérisation de 490 à 550, et la poudre de cellulose étant constituée de particules sphériques qui présentent une surface spécifique BET de 0,8 à 1,1 $m^2/g$ et un degré de gonflement dans l'eau à 20°C de 4 à 6 mg/g.

3. Utilisation de la matière cellulosique selon la revendication 1 pour la séparation de mélanges de substances, une partie au moins des constituants de ces mélanges de substances présentant une charge ionique.

4. Procédé de séparation chromatographique de mélanges de substances, dans lequel une partie au moins des constituants de ces mélanges de substances présente une charge ionique, caractérisé en ce qu'on utilise comme phase stationnaire la matière cellulosique selon la revendication 1.

**Claims**

1. An ionically modified cellulose material consisting of pulverulent microcrystalline cellulose in which the ionic moiety is linked to the cellulose moiety via the grouping of the formula

$$—O—CH_2—NH—CO$$

the carbonyl group being attached to the ionic moiety of the material and the oxygen atom being attached to the cellulose moiety of the material, wherein microcrystalline wood cellulose is employed in powder form as the starting material, the cellulose having a degree of polymerisation of 490 to 550, and the cellulose powder consisting of particles having a specific BET surface area of 0.8 to 1.1 $m^2/g$ and a degree of swelling in water at 20°C of 4 to 6 ml/g.

2. A process for the preparation of ionically modified cellulose material according to claim 1 by treating cellulose with a compound containing an N-methyloamide group, which comprises employing, as the starting material, microcrystalline wood cellulose in powder form, the cellulose having a degree of polymerisation of 490 to 550 and the cellulose powder consisting of spherical particles having a specific BET surface area of 0.8 to 1.1 $m^2/g$ and a degree of swelling in water at 20°C of 4 to 6 ml/g.

3. The use of the cellulose material according to claim 1 for separating mixtures of substances, at least some of the components in the mixtures of substances having an ionic charge.

4. A process for separating mixtures of substances chromatographically, at least some of the components in the mixtures of substances having an ionic charge, wherein the cellulose material according to claim 1 is employed as the stationary phase.